Europäisches Patentamt

European Patent Office

Office européen des brevets

(11) Numéro de publication: **0 318 383**
**A1**

(12) **DEMANDE DE BREVET EUROPEEN**

(21) Numéro de dépôt: **88402953.9**

(22) Date de dépôt: **24.11.88**

(51) Int. Cl.⁴: **C 22 B 58/00**
C 22 B 3/00, C 01 G 15/00

(30) Priorité: **24.11.87 FR 8716291**

(43) Date de publication de la demande:
**31.05.89 Bulletin 89/22**

(84) Etats contractants désignés:
**AT BE CH DE ES FR GB GR IT LI LU NL SE**

(71) Demandeur: **METALEUROP S.A.**
**Le Péripole 1 58, rue Roger-Salengro**
**F-94120 Fontenay-sous-Bois (FR)**

(72) Inventeur: **Le Quesne, Yves**
**35, rue Mathurin Régnier**
**F-75015 Paris (FR)**

(74) Mandataire: **Martin, Jean-Jacques et al**
**Cabinet REGIMBEAU 26, Avenue Kléber**
**F-75116 Paris (FR)**

(54) **Procédé de traitement hydrométallurgique de solution de matières gallifères.**

㉗ L'invention concerne un procédé de traitement hydrométallurgique de solution de matières gallifères contenant en outre au moins un métalloïde de la colonne V de la classification périodique des élements. Elle est caractérisé par le fait que le procédé comporte les étapes suivantes :

b) ajustement de la concentration en ions chlorure et de l'acidité de ladite solution par adjonction d'acide chlorhydrique et de chlorure alcalin ou alcalino-terreux ;

c) mise en contact de ladite solution avec une phase organique contenant au moins un composé phosphoré pentavalent neutre présentant une double liaison phosphore-oxygène.

Application à la métallurgie extractive du gallium et des éléments l'accompagnant.

EP 0 318 383 A1

Bundesdruckerei Berlin

**Description**

## PROCEDE DE TRAITEMENT HYDROMETALLURGIQUE DE SOLUTION DE MATIERES GALLIFERES

La présente invention a pour objet la récupération du gallium contenu dans diverses matières premières ou matières premières secondaires simultanément avec des impuretés telles que les métalloïdes de la colonne V de la classification périodique des éléments.

Elle concerne plus particulièrement le traitement soit de solutions de chlorure de gallium, soit de matières gallifères à l'état totalement ou partiellement réduit.

Comme exemple de telles matières gallifères réduites on peut citer le gallium métal et les phosphures, arséniures, nitrures, antimoniures de ce métal.

Le gallium, que ce soit dans les matières premières primaires ou secondaires, est souvent lié aux éléments de la colonne V : ainsi, les poussières de manufactures de phosphore, les résidus d'usinage d'arséniure et de phosphure de gallium ...

Pour des raisons d'économie, il est préférable que les procédés de traitement de ces produits ou de ces solutions utilisent des techniques en voie chlorure déjà partiellement mises au point pour la récupération primaire du gallium où de telles impuretés ne se rencontrent pas. Ces techniques utilisent en général les phosphates de trialcoyles, notamment le plus courant d'entre eux le phosphate de tributyle, couramment désigné par son sigle anglo-saxon TBP, qui servira de paradigme à cette famille (cf. Science and Technology of tributyl phosphate, volume 2, pages 97-99, CRC Press Inc).

Une première difficulté réside dans la présence parmi les matières gallifères d'autres éléments ayant des propriétés chimiques voisines tels que par exemple l'indium et plus généralement les métaux présentant des sousoxydes volatils. En outre, les éléments de la colonne V présentent souvent des propriétés analogues à celles des composés III, ce qui rend la séparation difficile.

Selon les techniques classiques de récupération du gallium, cet élément est mis en solution chlorhydrique et est récupéré par extraction liquide-liquide du trichlorure de gallium formé au moyen d'agents liposolubles complexants des acides de Lewis, agents tels que les amines et les composés organo-phosphorés neutres du type oxyde de tri-octyl phosphine (TOPO) et phosphate de tri-butyle (TBP).

Une deuxième difficulté dans le traitement de ces matières premières secondaires réside dans le caractère particulièrement pyrophorique et inflammable de ces produits et des gaz qu'ils produisent lors de leur action sur l'eau. Ainsi, le phosphure de gallium donne sur des phases aqueuses des phosphines, composés très inflammables, dont certains seraient à l'origine de l'inflammation de dégagements naturels de méthane et donneraient lieu à ce qui est communément appelé "feux follets".

Il convient également de mentionner que les composés hydrogénés de l'arsenic, de l'antimoine et du phosphore sont hautement toxiques.

Un des buts de la présente invention est de fournir un procédé dérivé des procédés ci-dessus mais adapté aux problèmes spécifiques des matières gallifères évoquées ci-dessus.

Ainsi, un des buts de la présente invention est de fournir un procédé qui permette, à partir des mêmes réactifs d'extraction qu'utilisés antérieurement, d'assurer une bonne séparation du gallium sous forme de chlorure d'avec les métalloïdes de la colonne V ou d'avec les impuretés susceptibles d'être présentes dans les déchets de composés III-V de gallium ou dans d'autres sources d'alimentation en matières gallifières. Parmi ces impuretés on peut citer l'indium, l'antimoine.

Ces buts ainsi que d'autres qui apparaîtront par la suite sont atteints au moyen d'un procédé de traitement hydrométallurgique de solution de matières gallifères contenant en outre au moins un métalloïde de la colonne V de la classification périodique des éléments, caractérisé par le fait qu'il comporte les étapes suivantes :

b) ajustement de la concentration en ions chlorure et de l'acidité de la solution à extraire (par exemple obtenue à l'étape a) décrite ci-après par adjonction d'acide chlorhydrique et de chlorure alcalin ou alcalino-terreux;

c) mise en contact de ladite solution avec une phase organique contenant au moins un composé phosphoré pentavalent neutre présentant une double liaison phosphore-oxygène.

Une fois le gallium mis en solution à une concentration de préférence au moins égale à 20 g/l, avantageusement de 30 à 200 g/l (les zéros n'étant pas des chiffres significatifs), il convient de le rendre apte à être extrait par les composés phosphorés pentavalents neutres en régulant le niveau d'acidité et la concentration en ions chlorure de manière que pour ces derniers elle atteigne une valeur comprise entre 4 et 10 N, cependant que le niveau d'acidité doit être supérieur à 1 N, de préférence supérieur à 3 N, avantageusement autour de 5 N.

L'extraction liquide-liquide, après cet ajustement, est menée de préférence avec des composés phosphorés du type ci-dessus qui soient commerciaux, tels que le TOPO ou de préférence le phosphate de trialcoyle le plus commun, celui désigné sous le sigle anglo-saxon de TBP (phosphate de tributyle).

Dans le but de mieux contrôler l'extraction liquide-liquide, et ce tant au niveau de la viscosité qu'à celui des propriétés chimiques, il est souhaitable que le phosphate de trialcoyle soit dissous dans des carbures aromatiques ; en général on choisit comme carbures aromatiques des fractions pétrolières à point d'ébulition élevés et à point éclair élevés, du type de celui vendu sous la marque Solvesso 150. Généralement, pour des raisons économiques, on utilise comme phosphate de trialcoyle le phosphate de tributyle, plus connu sous l'abréviation de son sigle anglo-saxon TBP.

La phase organique contient de préférence de 20 à 60 %, avantageusement de 30 à 50 %, de phosphate de trialcoyle en volume.

Afin d'être sélectif vis-à-vis des impuretés mentionnées ci-dessus, il convient de réaliser l'extraction liquide-liquide de manière que la concentration en chlorure de gallium dans la phase organique soit au moins égale à 90 %, de préférence à 95 %, avantageusement à 99 % de sa valeur à saturation s'il était le seul élément extractible.

Pour ce faire, on jouera essentiellement sur le rapport phase organique sur phase aqueuse en le limitant le plus possible. A titre indicatif, on pourra jouer sur la quantité de composés phosphorés mis en oeuvre par unité de gallium présent dans la solution (réglage des débits). Un rapport de deux molécules de composés organo-phosphorés par molécule de chlorure de gallium doit être visé. Il est préférable donc de se placer dans la partie de l'isotherme d'extraction où cette courbe forme un quasi-palier. Ceci est atteint notamment par le réglage du niveau chlorure et du niveau d'acidité prévu dans l'étape b). Ainsi, le rapport entre la valeur de saturation et la valeur d'extraction réelle doit être aussi proche que possible de 1, d'où l'intérêt d'obtenir des concentrations en gallium très élevées et donc lors de l'étape a) décrite ci-après, des taux de solide dans la suspension également élevés, de préférence compris entre 50 et 500 grammes par litre (un chiffre significatif).

Enfin, pour être plus sélectif vis-à-vis de l'arsenic, ce dernier étant moins bien extrait par les composés phosphorés sous forme V que sous forme III, il est avantageux qu'une oxydation soit réalisée de manière qu'au moins deux tiers, de préférence 95 %, avantageusement 99 % de l'arsenic soient présents sous forme pentavalente. Cette oxydation peut être menée lors de l'étape à) éventuelle ci-après. Ce rapport, selon la loi de Nernst, fixe le potentiel redox de la solution. Un potentiel satisfaisant est un potentiel situé aux alentours de 1 V par rapport à l'électrode de Ag/AgCl.

Lorsque la phase organique contient encore quelque impureté, il est possible de laver cette phase par des solutions de chlorure de gallium concentrées. Une des meilleures possibilités consiste à laver avec un mélange HCl-CaCl$_2$ ladite phase organique avec un rapport O/A le plus élevé possible. Le chlorure de gallium ainsi obtenu peut être avantageusement recyclé par exemple dans la phase aqueuse de suspension de l'éventuelle étape a) ci-après.

Le nombre d'étages d'extraction est fixé de manière que l'extraction du gallium soit aussi totale que possible avec une concentration en impuretés aussi faible que possible à la sortie. Le nombre d'étages est en général compris entre 3 et 5.

Un autre but de la présente invention est de fournir un procédé d'attaque des composés gallifères spécifiés ci-dessus qui donne du chlorure de gallium et qui évite ou limite la formation de gaz toxiques ou inflammables.

Un autre but de la présente invention est de fournir un procédé d'attaque qui évite toute inflammation intempestive de ces matières gallifères.

Il est à noter qu'éviter l'inflammation de ces matières gallifères ou des gaz qu'elles dégagent est particulièrement important lorsque ces matières gallifères comportent en outre des diluants organiques tels que ceux utilisés lors de l'usinage des composés III-V.

Ce but est atteint au moyen de l'adjonction, avant l'étape b) de l'étape suivante :
a) mise en solution du gallium par attaque au chlore d'une suspension desdits matières gallifères;

L'attaque au chlore de tels composés est connue en soi mais elle est particulièrement difficile à mettre en oeuvre en milieu aqueux. C'est la raison pour laquelle dans une demande de brevet récente (demande de brevet européen publiée sous le n° 0219213 déposée par la société SUMITOMO METAL MINING), on a proposé d'attaquer de tels composés dans un bain de sels fondus dont le principal constituant est le chlorure d'arsenic. Ceci a conduit à réaliser la séparation du chlorure d'arsenic d'avec le chlorure de gallium par distillation, malgré la difficulté d'une telle technique.

En général, lorsqu'on attaque au chlore en phase aqueuse de tels composés les risques d'explosion sont importants et nécessitent des appareillages particulièrement coûteux pour éviter aussi bien les risques du feu que d'intoxication.

Au cours de l'étude qui a mené à la présente invention on a pu démontrer qu'en se plaçant dans des zones, du moins au début de la réaction, où il n'est pas normal de se placer pour dissoudre le gallium, c'est-à-dire à un pH où le chlore n'existe pas en solution (dismutation > à environ 3) et où le gallium est normalement insoluble car précipité sous forme de tri-hydroxyde, on pouvait éviter toute inflammation et tout dégagement de matières toxiques.

Il est préférable que la température de la solution pendant l'étape a) d'attaque soit inférieure à 80°C, avantageusement au plus égale à 50°C (ces deux dernières valeurs sont données avec un seul chiffre significatif).

Lorsque l'on parle de chlore, il faut comprendre non seulement le chlore gazeux mais aussi toute opération susceptible de donner du chlore "in situ". Comme exemples de dégagement de chlore "in situ", on peut donner l'électrolyse en milieu chlorure et les réactions contaires à celle de la dismutation de cet halogène.

Une des mises en oeuvre possibles de la présente invention consisterait à introduire le chlore sous la forme d'acide chlorhydrique et de chlorure de chaux (mélange de chlorure et de hypochlorite de chaux dont une des formules proposées est CaClOCl), sous réserve de respecter les contraintes d'acidité spécifiées ci-dessus.

Une des manières satisfaisantes de mener la réaction consiste à partir d'une phase aqueuse présentant un pH compris dans le domaine ci-dessus (inexistence de chlore dissous et existence de précipités d'hydroxyde de gallium), à savoir pH compris entre 3 et 8, à former une pulpe avec le produit gallifère (étape a) et à y faire barbotter du chlore gazeux, puis on laisse la température monter sous l'effet de l'exothermicité de la réaction.

3

A la suite de l'étape c), il est possible de réaliser, selon des techniques connues de l'homme de l'art, un rinçage de la phase organique pour éliminer les particules de phase aqueuse entraînées dans la phase organique. Un lavage de ce type se trouve dans l'exemple 4.

L'étape c) d'extraction liquide-liquide peut être suivie, en ce qui concerne la phase aqueuse par une étape de récupération ou d'élimination de l'arsenic. Ces étapes sont connues en elles-mêmes. Comme étape de récupération on peut citer une réduction de l'arsenic V en arsenic III suivie d'une distillation connue en soi des trichlorures d'arsenic. On peut également, dans des perspectives d'environnement, précipiter l'arsenic sous forme d'arséniate de chaux et d'arséniate de fer par addition d'un de ces deux éléments sous une forme convenable et par ajustement du pH au pH de précipitation de l'arséniate de chaux et de l'arséniate de fer. Les solutions de chlorure ainsi obtenues peuvent éventuellement faire l'objet de recyclages vers l'étape a) ou, après évaporation et formation du sel, vers l'étape b).

La phase organique chargée en chlorure de gallium, éventuellement lavée comme décrit ci-dessus, peut être éluée en une étape d) soit par une phase aqueuse pauvre en ions chlorure (inférieure à 1 N, de préférence inférieure à 0,1 N), soit de préférence désextraite en milieu sodique pour former d'une part un gallate de sodium, ou d'un autre métal alcalin et d'autre part le chlorure de sodium, ou d'un autre métal alcalin.

Cette solution permet un régénération complète du TBP et permet en outre une étape e) de récupération par électrolyse du gallium.

Pour cette étape e) d'électrolyse, il est préférable que la teneur en base libre (OH⁻) soit supérieure à 4 N. Il est ainsi possible de réaliser l'étape d) d'élution à la soude, soit en mettant en contact avec de la soude en quantité et en concentration telles que la soude résiduelle soit au moins égale à 0,1 N, de préférence égale à 0,5 N, et en ajustant ultérieurement la quantité de base, soit en mettant en contact la solution de TBP avec une base en quantité et en concentration telles que, à la fin de la désextraction, la quantité de base résiduelle soit au moins égale à 4 N.

Ainsi, l'étape d'électrolyse est de préférence menée avec une concentration de soude au moins égale à environ 4 N sous des densités de courant comprises entre 80 (un chiffre significatif) et 300 (un chiffre significatif) $A/m^2$ et à une température comprise entre 35 et 50°C.

Les exemples qui suivent et qui ne présentent aucun caractère limitatif ont pour but de mettre les spécialistes à même de déterminer aisément les conditions opératoires qu'il convient d'utiliser dans chaque cas particulier.

## Exemple 1

100 g de boues d'usinage d'arséniure de gallium, contenant 45,5 % de gallium et 47,9 % d'arsenic, sont mis en suspension dans 500 ml d'eau. On ne détecte pas d'arsine ($AsH_3$) au-dessus du réacteur et aucune réaction violente ne se produit. Du chlore gazeux est ensuite injecté dans la suspension agitée à raison de 80 g/h durant 7 heures, cependant que la température monte jusqu'à 75°C.

Une fois l'attaque terminée, on filtre la suspension, on lave le résidu à l'eau et on récupère 4,46 g de résidu sec contenant 19,4 % de gallium et 0,60 l de solution aqueuse contenant du chlorure de gallium. Le rendement de lixiviation du gallium est donc supérieur à 98 %.

## Exemple 2

100 g de boues d'usinage de phosphure de gallium, contenant 56,5 % de gallium et 18,5 % de phosphore, sont mis en suspension dans 500 ml d'eau. On ne détecte aucune trace de phosphines ($PH_3$, $P_2H_4$,...) au-dessus du réacteur et aucune inflammation ne se produit. Du chlore gazeux est ensuite injecté dans la suspension agitée à raison de 100 g/h pendant 7 heures. La température de la suspension monte jusqu'à 76°C au cours de la réaction. Lorsque l'attaque est finie, on filtre la suspension, on lave le résidu à l'eau et on récupère 12,5 g de résidu sec contenant 0,76 % de gallium et 600 ml de solution contenant du chlorure de gallium.

Le rendement de lixiviation du gallium est donc supérieur à 99 %.

## Exemple 3

100 g de plaquettes cassées de phosphure de gallium, broyées au préalable à une granulométrie de $d_{80} = 240$ μm, contenant 71,1 % de gallium et 25,7 % de phosphore, sont mis en suspension dans 500 ml d'eau. On ne détecte aucune trace de phosphine ($PH_3$) au-dessus du réacteur et aucune inflammation ne se produit. Du chlore gazeux est ensuite injecté dans la suspension agitée à raison de 100 g/h pendant 7 heures. La température de la suspension monte à 76°C au cours de la réaction. Lorsque l'attaque est finie, on filtre la suspension, on lave le résidu à l'eau et on récupère 0,97 g de résidu sec contenant 33,4 % de gallium et 620 ml de solution contenant du chlorure de gallium.

Le rendement de dissolution du gallium est donc supérieur à 99 %.

## Exemple 4

Par mise en solution du gallium par attaque au chlore d'une suspension de matières gallifères définie dans les exemples 1, 2 et 3, on obtient, après ajout de Ca $Cl_2$, une solution $PHA_{infl}$ dont le potentiel par rapport à l'électrode Ag/AgCl est d'un volt environ et qui est mise en contact, à contre-courant dans une batterie de 4 mélangeurs-décanteurs, avec une phase organique formée en volume de 40 % de TBP et de 60 % de SOLVESSO 150, en respectant un rapport phase organique sur phase aqueuse (O/A) de 0,9 ; on obtient, après mise à l'équilibre chimique de la batterie, une phase organique PHO$_{eff}$dont la composition, ainsi que celle de PHA$_{infl}$, est donnée dans le tableau ci-après.

Dans une deuxième étape, on met en contact cette phase organique chargée en gallium avec une phase aqueuse titrant HCl = 1 N et CaCl$_2$ = 2 M, suivant un rapport O/A de 10, à contre-courant sur une batterie de 4 mélangeurs-décanteurs. On épure ainsi totalement la phase organique et on obtient, après mise à l'équilibre chimique de la batterie, une phase organique PHO$_{lav}$ et une phase aqueuse de lavage PHA$_{lav}$ dont les compositions respectives sont données dans le tableau ci-après.

| Espèces chimiques | PHASES | | | | |
|---|---|---|---|---|---|
| | PHA$_{infl}$ | PHA$_{eff}$ | PHO$_{eff}$ | PHO$_{lav}$ | PHA$_{lav}$ |
| Ga en g/l | 46,1 | 0,2 | 51,1 | 46,2 | 49,2 |
| As en g/l | 23,6 | 23,4 | 0,164 | 5.10$^{-3}$ | 1,6 |
| In en g/l | 0,46 | 0,45 | 10.10$^{-3}$ | inf.10$^{-3}$ | 0,1 |
| P en g/l | 8,7 | 8,6 | | | |
| CaCl$_2$ en M | 1,5 | 1,5 | | | 2 |
| HCl en N | 5 | 2,7 | | | 2 |
| Sélectivité de la récupération du gallium par rapport : | | | | | |
| - à l'arsenic | | | 160 | 29 | |
| - à l'indium | | | 51 | sup. 9 | . |
| Sélectivité cumulée : | | | | | |
| - arsenic | | | | 4640 | |
| - indium | | | | sup. 460 | |

## Exemple 5

Une solution de chlorure de gallium dans le TBP (40%) obtenue par contact de ce dernier dans les conditions de l'invention avec une solution industrielle de chlorure de gallium est mise en contacte deux fois avec de la soude 2 N avec un rapport O/A = 1. Les résultats sont rassemblés dans le tableau ci-après.

La soude consommée est égale à 1,85 N.

| | Volume (l) | Ga g/l | As mg/l | In mg/l | Na g/l | Cl$^-$ g/l | Ca mg/l | OH$^-$ (N) |
|---|---|---|---|---|---|---|---|---|
| Phase organique initiale | 4,15 | 37,7 | 44 | 2 | - | - | - | - |
| Phase organique 1er contact | - | 0,025 | 21 | 1 | - | - | - | - |
| Phase aqueuse 1er contact | 4,4 | 32,5 | 12 | 1,6 | 30,0 | 61,4 | 15,9 | 0,85 |
| Phase organique 2ème contact | 4,1 | 0,021 | 17 | 1 | - | - | - | - |
| Phase aqueuse 2ème contact | 4,3 | 3,2 | 16 | 2,5 | 19,1 | 35,8 | 35,8 | 1,3 |
| Rendement réextraction % | | 99,9 | 62,0 | 50,0 | | | | |

## Exemple 6: Electrolyse du gallium obtenu dans des solutions de réextraction sodique

Des essais d'électrolyse ont été effectués à partir de solutions sodiques de réextraction en faisant varier comme paramètres la teneur en soude libre et la densité de courant avec une régulation thermique pour maintenir le catholyte et l'anolyte à 40°C. Les cathodes et anodes sont en inox et un bac de récupération du gallium liquide se trouve situé à l'extrémité inférieure de la cathode. Au cours de l'électrolyse, les gouttes de gallium s'écoulent le long de la surface de la cathode (verticale) et sont collectées dans ledit bac. La solution gallifère alimentant la cuve d'électrolyse présente la composition suivante :

Ga = 32,5 g/l
Cl⁻ = 61,4 g/l
Na = 30,0 g/l
OH⁻ = 0,85 N
As = 12 mg/l
In = 1,6 mg/l

Les paramètres des différents essais sont rassemblés dans le tableau suivant:

| OH⁻ (N) | Teneur initiale Ga g/l | Densité courant A/m² | Durée (h) | Rendement faradique % | Phénomènes anodiques |
|---|---|---|---|---|---|
| 0,85 | 32,5 | 250 | 12 | 60 à 14 | Dégagement Cl₂, formation d'hypochlorites, attaque |
| 0,85 | 32,5 | 80 | 3 | 62 | Dégagement Cl₂, attaque |
| 2 | 25 | 80 | 3,5 | 83 | Pas de dissolution apparition de quelques piqûres |
| 2 | 25 | 120 | 5 | 79 | Légère attaque |
| 3 | 20 | 120 | 4,5 | 77 | Pas d'attaque, anolyte incolore |
| 3 | 15 | 240 | 2,5 | 72 | Pas d'attaque anolyte légèrement jaune |

Le gallium obtenu est d'une pureté supérieure à 99,99 % (In et As supérieurs à la limite de détection, c'est-à-dire respectivement inférieur à 3 g/t et inférieur à 8 g/t).

Exemple 7

Une solution de chlorure de gallium dans le TBP (phase organique chargée obtenue par contact de ce dernier dans les conditions de l'invention avec une solution industrielle de chlorure de gallium est mise en contact, en continu dans un réacteur agité, avec de la soude 7 N avec un rapport O/A = 1,4. On dose le gallium dans la soude après réextraction. La soude consommée est égale à 2,6 N. Les résultats sont rassemblés dans le tableau suivant :

| Espèces Chimiques | Phases | | |
|---|---|---|---|
| | Phase 0 chargée | Soude avant réextrac-tion | Soude après réextrac-tion |
| Ga en g/l | 45,0 | | 64,0 |
| As en mg/l | 15.10⁻³ | | 0,02 |
| In en g/l | Inf. à 10⁻³ | | |
| NaOH en N | | 7 | |

Le rendement de réextraction du gallium est supérieur à 99,9 %.

**Revendications**

1. Procédé de traitement hydrométallurgique de solution de matières gallifères contenant en outre au moins un métalloïde de la colonne V de la classification périodique des éléments, caractérisé par le fait qu'il comporte les étapes suivantes :

    b) ajustement de la concentration en ions chlorure et de l'acidité de ladite solution par adjonction d'acide chlorhydrique et de chlorure alcalin ou alcalino-terreux ;

    c) mise en contact de ladite solution avec une phase organique contenant au moins un composé phosphoré pentavalent neutre présentant une double liaison phosphore-oxygène.

2. Procédé selon la revendication 1, caractérisé par le fait que l'étape b) est réalisée de manière que la concentration en ions chlorure, compte non tenu de ceux liés au gallium, soit comprise entre 4 et 10 N.

3. Procédé selon les revendications 1 et 2 prises séparément, caractérisé par le fait que ledit composé phosphoré est un phosphate de trialcoyle.

4. Procédé selon la revendication 3, caractérisé par le fait que ledit composé phosphoré est le phosphate de tributyle.

5. Procédé selon les revendications 1 à 4 prises séparément, caractérisé par le fait que l'étape c) est menée de manière que la concentration en chlorure de gallium dans la phase organique soit égale à 90 % de sa valeur à saturation s'il était le seul élément extractible.

6. Procédé selon la revendication 5, caractérisé par le fait que la régulation de la concentration en chlorure de gallium est réalisée par le rapport phase organique sur phase aqueuse.

7. Procédé selon les revendications 1 à 6 prises séparément, caractérisé par le fait que le potentiel redox de la solution avant l'étape b) est tel que les deux tiers de l'arsenic éventuellement présent soient sous forme pentavalente.

8. Procédé selon les revendications 1 à 7 prises séparément, caractérisé par le fait qu'il comporte avant l'étape b) en outre l'étape suivante :

    a) mise en solution du gallium par attaque au chlore d'une suspension desdites matières gallifères ;

9. Procédé selon la revendication 8, caractérisé par le fait que la température de la solution pendant l'étape a) d'attaque est inférieure à 70°C.

10. Procédé selon la revendication 9, caractérisé par le fait que la température de la solution pendant l'étape a) d'attaque est au plus égale à 50°C.

11. Procédé selon les revendications 8 et 9 prises séparément, caractérisé par le fait que ladite suspension desdites matières gallifères est une suspension aqueuse réalisée à température ambiante.

12. Procédé selon la revendication 11, caractérisé par le fait qu'au cours de l'étape a) on laisse la température monter sous l'effet de l'exothermicité de la réaction.

13. Procédé selon les revendications 11 et 12 prises séparément, caractérisé par le fait qu'au début de l'attaque ladite suspension présente un pH compris entre 3 et 8.

14. Procédé selon les revendications 8 à 13 prises séparément, caractérisé par le fait que la teneur en solides de la suspension de matières gallifères est comprise entre 50 et 500 grammes par litre.

15. Procédé selon les revendications 1 à 14 prises séparément, caractérisé par le fait qu'il comporte en outre l'étape suivante :

    d) désextraction en milieu sodique de ladite phase organique

16. Procédé selon les revendications 1 à 15 prises séparément, caractérisé par le fait qu'il comporte en outre l'étape suivante :

    e) récupération du gallium par électrolyse dans un électrolyte dont la concentration en base libre est au moins égale à 4 N.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.3) |
|---|---|---|---|
| A | PATENT ABSTRACTS OF JAPAN vol. 11, no. 53 (C-404) (2500), 19 février 1987; & JP - A - 61 215 214 (DAIHACHI K.K.), 25-09-1986 --- | 1 | C 22 B 58/00 C 22 B 3/00 C 01 G 15/00 |
| A,D | EP-A-0 219 213 (SUMITOMO METAL MINING) * revendication 1 * --- | | |
| A | DE-A-3 235 136 (HOECHST) * page 3 * --- | 1 | |
| A | GB-A-2 184 108 (ELKEM) --- | | |
| A | US-A-4 094 753 (CHARLTON et al.) ----- | | |

DOMAINES TECHNIQUES RECHERCHES (Int. Cl.3)

C 22 B 58/00
C 22 B 3/00
C 01 G 15/00

Le présent rapport a été établi pour toutes les revendications

| Lieu de la recherche | Date d'achèvement de la recherche | Examinateur |
|---|---|---|
| BERLIN | 31-01-1989 | SUTOR W |